# EUROPÄISCHE PATENTSCHRIFT

(11) **EP 0 585 743 B1**
(45) Veröffentlichungstag und Bekanntmachung des Hinweises auf die Patenterteilung: **02.05.1997**
(21) Anmeldenummer: 93113263.3
(22) Anmeldetag: 19.08.1993
(51) Int. Cl.: F21Q 1/00

(54) **Signalleuchte**
Signal light
Feu de signalisation

(30) Priorität: 31.08.1992 DE 4228929
(43) Veröffentlichungstag der Anmeldung: 09.03.1994
(73) Patentinhaber: ITT Automotive Europe GmbH, 60488 Frankfurt am Main (DE)
(72) Erfinder: Feger, Rolf, D-74321 Bietigheim-Bissingen (DE); Holzmacher, Günther, D-71679 Asperg (DE); Neumann, Eckhard, D-74343 Sachsenheim (DE)

(56) Entgegenhaltungen:
- EP-A- 0 211 742
- FR-A- 2 567 991

## Beschreibung

Die Erfindung betrifft eine Signalleuchte, insbesondere für Kraftfahrzeuge, mit einer Lichtquelle, mit einem Gehäuse und einem dieses abschließenden Abschlußglas, welches an seiner der Lichtquelle zugewandten Innenfläche mit Stegen versehen ist.

Signalleuchten dieser Art sind z.B. aus dem DE 90 14 203 U1 und der EP 0 442 095 A2 bekannt. Bei diesen Signal leuchten sind mehrere Kammern vorgesehen, die über ein oder mehrere Abschlußgläser nach außen verschlossen sind. Dabei bildet jede Kammer ein separates Signalleuchtenelement, also ein Rücklicht, ein Blinklicht, ein Rückfahrlicht, ein Bremslicht usw. In letzter Zeit wurde immer öfters der Wunsch ausgesprochen, daß diese als Mehrkammerleuchte ausgebildete Signalleuchte ein farblich harmonisches Erscheinungsbild aufweist. Dies ist insbesondere dann nicht der Fall, wenn die Signalleuchte ein gelbes Abdeckelement für die Blinkleuchte, ein weißes Abdeckelement für die Rückfahrleuchte und rote Abdeckelemente für die übrigen Leuchten besitzt, wobei die roten Abdeckelemente unterschiedliche Intensität aufweisen.

Bei den bekannten Signalleuchten wurde versucht das Erscheinungsbild dadurch zu vereinheitlichen, indem das Abschlußglas an seiner Innenfläche mit Stegen versehen worden ist. Diese Stege sind dann an der den Lichtstrahlen zugewandten Flächen mit einer lichtundurchlässigen farbigen Folie beklebt worden. Dabei hat sich als nachteilig herausgestellt, daß für die Herstellung derartiger Abschlußgläser mehrere Arbeitsgänge erforderlich sind, nämlich wenigstens ein Arbeitsgang für das Spritzen des Abdeckglases und ein Arbeitsgang für das Aufprägen der undurchsichtigen Folie. Ferner hat sich herausgestellt, daß das Aufprägen der Folie eine Fehlerquelle darstellt, da die Oberfläche, auf die die Folie aufgeklebt wird, sauber und eben sein muß. Abgesehen von den mehreren Arbeitsgängen ist die Herstellung eines derartigen Abschlußglases auch teuer, da neben dem Spritzgußwerkzeug zusätzlich Prägestempel erforderlich sind, die außerdem ständig im Hinblick auf ihre Abnutzung überwacht werden müssen.

Derartige Abschlußgläser können also nicht automatisch hergestellt werden, ferner sind mehrere Arbeitsgänge erforderlich und der Personalaufwand ist relativ hoch.

Der Erfindung liegt daher die Aufgabe zugrunde, eine Signalleuchte der eingangs genannten Art derart weiterzubilden, daß sie einfacher und kostengünstiger herstellbar ist.

Diese Aufgabe wird erfindungsgemäß dadurch gelöst, daß das Streifen- oder Gitternetz von Stegen aus einem farbigen bzw. eingefärbten, lichtundurchlässigen Kunststoffmaterial gebildet ist, welche direkt an die der Lichtquelle der Signalleuchte zugewandte Innenseite des Abschlußglases angespritzt sind.

Die Verwendung eines lichtundurchlässigen Materials für die Stege, welche auf die Rückseite des Abschlußglases aufgespritzt werden, weist den bemerkenswerten Vorteil auf, daß diese Stege nicht mehr mit einer Folie beklebt werden müssen, da sie bereits lichtundurchlässig sind. Dies hat den Vorteil, daß nicht mehr darauf geachtet werden muß, daß die Stege eine glatte und saubere Oberfläche besitzen. Die Stege selbst können auch auf einen rauhen und unebenen Untergrund aufgespritzt werden. Durch den Wegfall eines Prägestempels, der außerdem noch ständig kontrolliert werden müßte, können nicht nur Material- sondern auch Personalkosten eingespart werden.

Da das Material der Stege farbig bzw eingefärbt ist, kann dem Abschlußglas, welches in der Regel aus mehreren Abschlußglaselementen besteht, wobei die einzelnen Abschlußglaselemente verschiedene Leuchtenkammern abdecken und verschiedene Signalfarben aufweisen, ein einheitliches Erscheinungsbild in einer gewünschten Farbe verliehen werden. So kann z.B. über die Stege das Abschlußglas in einem einheitlichen Rot erscheinen.

Heutzutage ist es üblich, daß Abschlußgläser für derartige Signalleuchten als spritzgegossene Teile aus einem lichtdurchlässigen Kunststoffmaterial gefertigt sind. In diesem Zusammenhang ist gemäß vorteilhaften Weiterbildungen der Erfindung vorgesehen, daß die lichtundurchlässigen Stege des Abschlußglases entweder aus einem zu dem Kunststoffmaterial des Abschlußglases verschiedenen oder gleichen Kunststoffmaterial bestehen.

Bevorzugt bilden die Stege ein Gitter. Dies hat den Vorteil, daß durch den gegenseitigen Verbund der Stege eine vereinfachte Füllung der Stege und somit eine höhere Betriebssicherheit bei der Fertigung des Glases erzielt werden kann.

Eine weitere Senkung der Herstellungskosten wird dadurch erzielt, daß die Stege und das Abschlußglas in einem Arbeitsgang herstellbar sind. Da das Abschlußglas bei der Herstellung dem einen Werkzeug nicht mehr entnommen und ins andere Werkzeug eingesetzt werden muß, werden auch Personal und die hierfür erforderlichen Kosten eingespart.

Bevorzugt weisen die Stege einen trapezförmigen Querschnitt auf, wobei die Grundlinie des Trapezes mit dem Abschlußglas in Verbindung steht. Dies hat den Vorteil, daß nach dem Spritzgußvorgang das Abschlußglas leicht aus der Spritzgußform entnommen werden kann. Dieses leichtere Ausformen besitzt zudem den Vorteil, daß der Ausschuß minimiert wird. Ferner trägt diese Querschnittsform der Stege zu einem reibungsloseren vollautomatischen Betrieb bei.
Außerdem hat dies den Vorteil, daß ein Teil der von der Lichtquelle ausgesandten und einen Winkel zur optischen Achse aufweisenden Lichtstrahlen nicht von den Stegen ausgeschattet wird, sondern aufgrund der schrägen Anordnung der Seitenflächen an diesen vorbei und zum Abschlußglas gelangen kann.

Ein einheitliches Erscheinungsbild nach außen wird der Signalleuchte dadurch verliehen, daß die Grundlinien der im Querschnitt trapezförmigen Stege gleich lang sind. Auf diese Weise erscheint die Signal leuchte mit gleich breiten Stegen bzw. Streifen, unabhängig von der Form der Signalleuchte bzw. dessen Abschlußglases.

Bei einer Weiterbildung ist vorgesehen, daß das Abschlußglas eine den Stegen zugewandte eingefärbte Schicht und eine nach außen weisende Deckschicht aufweist. Die den Stegen zugewandte eingefärbte Schicht vermittelt den von der Lichtquelle ausgesandten Strahlen die Signal farbe und wirkt als Lichtfilter, wobei die nach außen weisende Deckschicht als Schutzschicht wirkt. Die Deckschicht vermittelt außerdem dem gesamten Abschlußglas die erforderliche Brillianz. Dabei ist die Deckschicht vorzugsweise klar und farblos ausgebildet.

Für die wunschgemäße Verteilung des Lichts weist die Mittelschicht eine Optik auf. Diese kann z.B. aus einer Vielzahl von Prismen oder Linsen, insbesondere Zylinderlinsen bestehen. Diese Optik ist vorzugsweise zwischen den Stegen vorgesehen.

Auch bei dieser Ausführungsform kann eine einfache Herstellung des Abschlußglases dadurch erzielt werden, daß die Mittel- und die Deckschicht in einem Arbeitsgang herstellbar sind.

Bevorzugt erstreckt sich die Deckschicht über mehrere Lichtscheibenelemente, wodurch der Vorteil erzielt wird, daß dem gesamten Abschlußglas der Signalleuchte eine glatte Oberfläche vermittelt wird, und Nähte, insbesondere Stoßnähte, zwischen den einzelnen Lichtscheibenelementen vermieden werden.

Vorzugsweise kann die Außenoberfläche des Abschlußglases glatt oder strukturiert sein. Auf diese Weise kann die Signalleuchte den gestalterischen Anforderungen angepaßt werden, ohne daß der Aufbau der gesamten Leuchte verändert werden muß.

Weitere Vorteile, Merkmale und Einzelheiten der Erfindung ergeben sich aus der nachfolgenden Beschreibung, in der unter Bezugnahme auf die Zeichnung ein besonders bevorzugtes Ausführungsbeispiel im einzelnen wiedergegeben ist. Dabei zeigen:
- Figur 1: eine Sicht auf die Außenseite eines Abschlußglases einer Signal leuchte;
- Figur 2: einen Schnitt II-II gemäß Fig. 1;
- Figur 3: einen Ausschnitt III gemäß Fig. 2, insbesondere die an der Innenseite des Abschlußglases vorgesehenen Stege wiedergebend;
- Figur 4: eine Ansicht IV gemäß Fig. 3;
- Figur 5: einen Schnitt V-V gemäß Fig. 4; und
- Figur 6: eine vergrößerte Wiedergabe eines Ausschnitts VI gemäß Fig. 2.

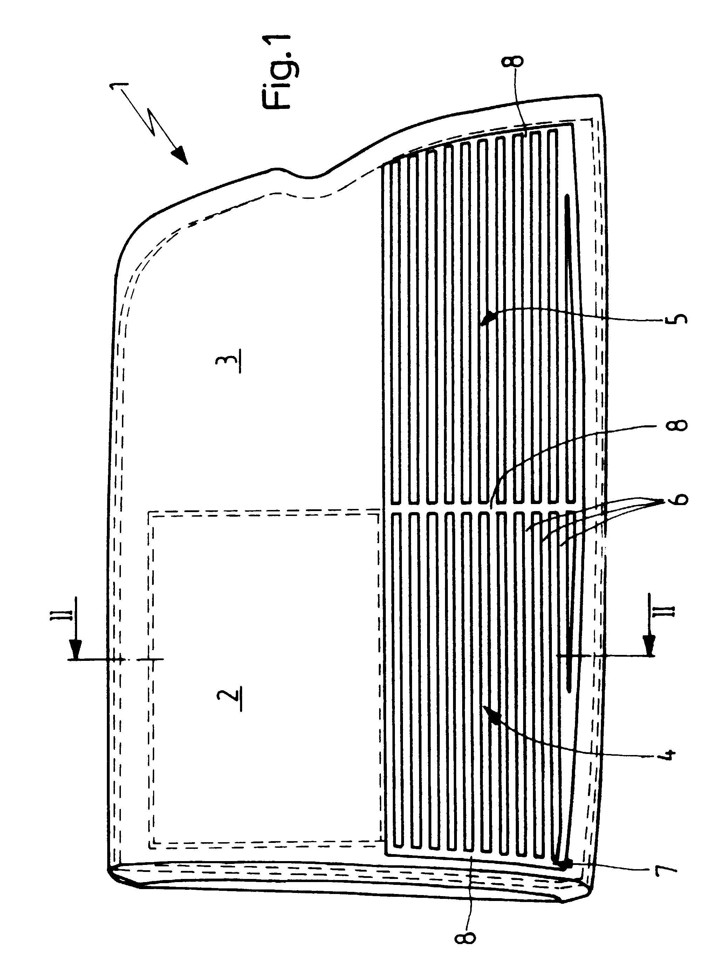

Die Fig. 1 zeigt ein insgesamt mit 1 bezeichnetes Abschlußglas, welches aus Kunststoff hergestellt ist. Durch die Bezeichnung "Glas" soll die Materialauswahl für das Abschlußglas nicht auf Glas beschränkt sein, sondern es kann hierfür jedes geeignete Material verwendet werden. Dieses Abschlußglas 1 ist in mehrere Abschlußglaselemente 2 bis 5 unterteilt. Diese einzelnen Abschlußglaselemente 2 bis 5 schließen nicht dargestellte Kammern einer Signal leuchte ab und bilden dabei z.B. ein Blinkerglas, ein Glas für eine Nebelschlußleuchte, ein Glas für ein Rückfahrlicht, ein Glas für ein Bremslicht usw. In Fig. 1 ist erkennbar, daß die beiden Abschlußglaselemente 4 und 5 an ihrer einer nicht dargestellten Lichtquelle zugewandten Innenfläche 9 mit Stegen 6 versehen sind. Diese Stege 6 bilden gemeinsam ein Gitter 7, indem die Stege 6 an ihren Enden über Querstege 8 miteinander verbunden sind.

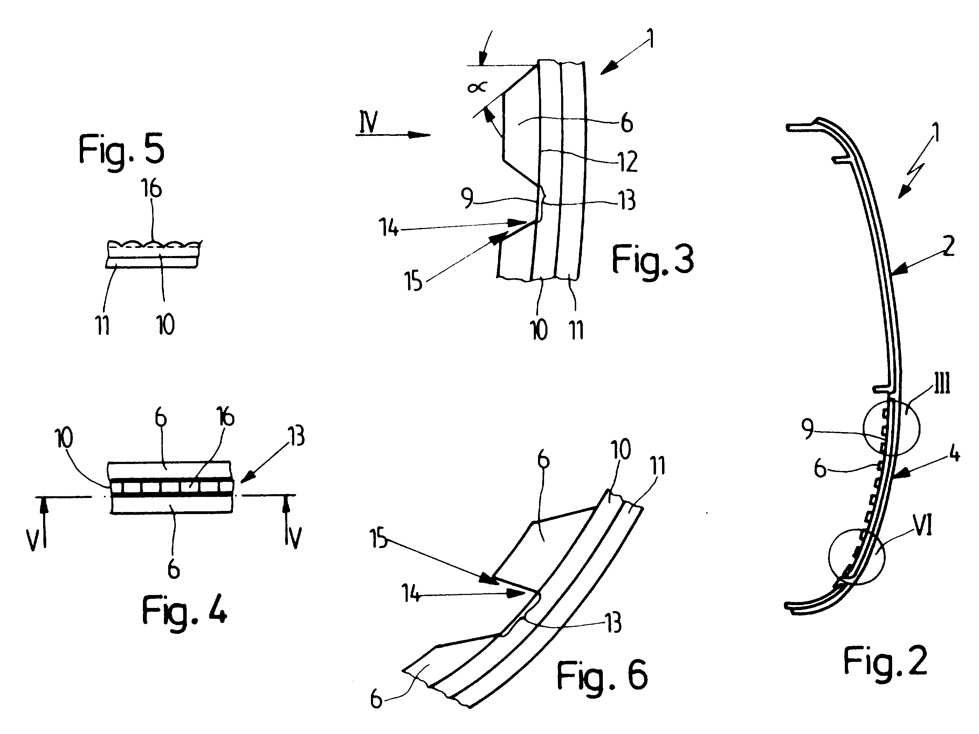

Der in der Fig. 2 dargestellte Schnitt II-II zeigt deutlich die Anordnung der Stege 6 auf der Rückseite 9 des Abschlußglases 1. Dabei ist erkennbar, daß die Stege 6 in waagerechter Richtung verlaufen und lediglich in der unteren Hälfte des Abschlußglases 1 vorgesehen sind. Von dieser unteren Hälfte des Abschlußglases 1 werden z.B. das Blinkerglas und das Glas für das Rückfahrlicht gebildet.

In der vergrößerten Wiedergabe des Ausschnitts III, der in der Fig. 3 dargestellt ist, ist deutlich erkennbar, daß das Abschlußglas 1 eine Mittelschicht 10 und eine Deckschicht 11 aufweist. Die Mittelschicht 10 ist entsprechend der erforderlichen Signalfarbe eingefärbt und bildet einen Lichtfilter. Die Deckschicht 11 ist klar und farblos ausgebildet. Auf der Innenfläche 9 der Mittelschicht 10 sind die Stege 6 angeordnet, die im Querschnitt trapezförmig ausgebildet sind. Dabei liegt die Grundlinie 12 des Trapezes bzw. die Grundfläche eines jeden Steges 6 auf der Innenfläche 9 an. Der Trapezwinkel α kann vorzugsweise zwischen 1,5° und 15° betragen. Die Stege 6 sind aus einem lichtundurchlässigen eingefärbten Kunststoff hergestellt, so daß das in Richtung des Pfeils IV auf die Innenfläche 9 auftreffende Licht der Lichtquelle das Abschlußglas 1 lediglich in den zwischen den Stegen 6 sich befindenden Zwischenräumen 13 passieren kann. Dabei durchtritt das Licht den von der Mittelschicht 10 gebildeten Lichtfilter und erfährt dadurch die gewünschte Signalfarbe. Wird das Abschlußglas 1 von außen betrachtet, dann vermitteln die an der Innenfläche sich befindenden Stege 6 dem Abschlußglas 1 ein der Farbe der Stege 6 entsprechendes farbiges Erscheinungsbild. Dabei wird die Farbe des von der Mittelschicht 10 gebildeten Lichtfilters, die in der Regel gelb oder weiss ist, weitestgehend übertönt. Auf diese Weise kann das Erscheinungsbild des Abschlußglases 1 vereinheitlicht werden.

Die trapezförmige Ausgestaltung der Stege 6 hat einerseits den Vorteil, daß das Abschlußglas 1, welches in einem einzigen Arbeitsgang gespritzt wird, wo also Deckschicht 11, Mittelschicht 10 und die Stege 6 hergestellt werden, besser aus der Spritzform ausgeformt werden kann. Ferner weist der trapezförmige Querschnitt der Stege 6 den Vorteil auf, daß Lichtstrahlen, die von der optischen Achse, die in Richtung des Pfeils IV verläuft, abweichen, dennoch durch das Abschlußglas 1 hindurchtreten können. Die Abweichung der Lichtstrahlen von der optischen Achse (Pfeil IV) kann maximal dem Trapezwinkel α betragen. In der Fig. 3 ist beispielhaft mit 14 ein Lichtstrahl dargestellt, der parallel zur optischen Achse verläuft, wohingegen mit 15 ein Lichtstrahl dargestellt ist, der einen Winkel zur optischen Achse aufweist. Beide Strahlen 14 und 15 können über den Zwischenraum 13 das Abschlußglas 1 verlassen.

In Fig. 4, die eine Draufsicht auf den Ausschnitt der Fig. 3 in Richtung des Pfeils IV in verkleinertem Maßstab wiedergibt, sind zwei Stege 6 und der Zwischenraum 13 erkennbar. In dem Zwischenraum 13 befindet sich die Mittelschicht 10, die die Optik 16 zur Lichtverteilung aufweist. Diese Optik kann z.B. von Zylinderlinsen gebildet werden.

Die Fig. 5 zeigt einen Schnitt V-V gemäß Fig. 4, wo die Zylinderlinsen deutlich erkennbar sind. Die Zylinderlinsen bzw. die Optik 16 und die Außenfläche der Deckschicht 11 sind hochglanzpoliert.

Die Fig. 6 zeigt in vergrößerter Wiedergabe den Ausschnitt VI gemäß Fig. 2, wobei auch hier deutlich erkennbar ist, daß von der optischen Achse abweichende Lichtstrahlen 15 an den Stegen 6 vorbei auf den Zwischenraum 13 auftreffen können. Aufgrund der trapezförmigen Ausgestaltung der Stege 6 wird nur ein geringer Anteil des von der Lichtquelle ausgesandten Lichts ausgeschattet.

Insgesamt kann festgestellt werden, daß das erfindungsgemäße Abschlußglas 1 schnell, einfach und kostengünstig herstellbar ist, wobei durch die angespritzten Stege 6 eine hohe Funktions-, Betriebs- und Qualitätssicherheit erzielt wird.

## Patentansprüche

1. Signalleuchte, insbesondere für Kraftfahrzeuge, mit einer Lichtquelle, mit einem Gehäuse und mit einem dieses Gehäuse abschließenden Abschlußglas (1), welches an seiner der Lichtquelle zugewandten Innenfläche (9) ein lichtundurchlässiges, farbiges Streifen- oder Gitternetz besitzt, dadurch **gekennzeichnet**, daß das Streifen- oder Gitternetz von Stegen (6) aus einem lichtundurchlässigen Kunststoffmaterial gebildet ist, welche an die Innenseite (9) des Abschlußglases (1) angespritzt sind.

2. Signalleuchte nach Anspruch 1, wobei das Abschlußglas (1) aus einem lichtdurchlässigen Kunststoffmaterial besteht, dadurch **gekennzeichnet**, daß die Stege (6) aus einem zu dem Material des Abschlußglases (1) verschiedenen Kunststoffmaterial bestehen.

3. Signalleuchte nach Anspruch 1, wobei das Abschlußglas (1) aus einem lichtdurchlässigen Kunststoffmaterial besteht, dadurch **gekennzeichnet**, daß die Stege (6) aus einem zu dem Material des Abschlußglases (1) gleichen Kunststoffmaterial bestehen.

4. Signalleuchte nach einem der vorhergehenden Ansprüche, dadurch **gekennzeichnet**, daß die Stege (6) ein Gitter (7) bilden.

5. Signalleuchte nach einem der vorhergehenden Ansprüche, dadurch **gekennzeichnet**, daß die Stege (6) und das Abschlußglas (1) in einem Arbeitsgang herstellbar sind.

6. Signalleuchte nach einem der vorhergehenden Ansprüche, dadurch **gekennzeichnet**, daß die Stege (6) einen trapezförmigen Querschnitt aufweisen, wobei die Grundlinie (12) des Trapezes mit dem Abschlußglas (1) in Verbindung steht.

7. Signalleuchte nach Anspruch 6, dadurch **gekennzeichnet**, daß die einander gegenüberliegenden und zueinander nicht parallelen Seitenflächen der Stege (6) von einem Teil des Lichts der Lichtquelle, welches parallel zur optischen Achse ausgerichtet ist, beaufschlagt werden.

8. Signalleuchte nach Anspruch 6 oder 7, dadurch **gekennzeichnet**, daß die Grundlinien (12) gleich lang sind.

9. Signalleuchte nach einem der vorhergehenden Ansprüche, dadurch **gekennzeichnet**, daß das Abschlußglas (1) eine den Stegen (6) zugewandte eingefärbte Schicht (10) und eine nach außen weisende Deckschicht (11) aufweist.

10. Signalleuchte nach Anspruch 9, dadurch **gekennzeichnet**, daß die Deckschicht (11) klar ist.

11. Signalleuchte nach Anspruch 9 oder 10, dadurch **gekennzeichnet**, daß die Mittelschicht (11) eine Optik (16) zur Lichtverteilung aufweist.

12. Signalleuchte nach einem der Ansprüche 9 bis 11, dadurch **gekennzeichnet**, daß die Mittel- und die Deckschicht (10 und 11) in einem Arbeitsgang herstellbar sind.

13. Signalleuchte nach einem der Ansprüche 9 bis 12, dadurch **gekennzeichnet**, daß sich die Deckschicht (11) über mehrere Lichtscheibenelemente erstreckt.

14. Signalleuchte nach einem der vorhergehenden Ansprüche, dadurch **gekennzeichnet**, daß die Außenoberfläche des Abschlußglases (1) glatt oder strukturiert ist.

## Claims

1. A signalling lamp, in particular for automotive vehicles, with a light source, with a housing and with a covering glass (1) closing this housing, the said covering glass featuring a light-proof coloured stripe-type or grid-type frame on its inner surface (9) facing the light source, characterised in that the stripe-type or grid-type frame is formed by webs (6) of a light-proof plastic material which are injection-moulded on the inside (9) of the covering glass (1).

2. A signalling lamp as claimed in claim 1, wherein the covering glass (1) consists of a light-transmitting plastic material, characterised in that the webs (6) consist of a plastic material different from the material of the covering glass (1).

3. A signalling lamp as claimed in claim 1, wherein the covering glass (1) consists of a light-transmitting plastic material, characterised in that the webs (6) consist of a plastic material which is the same as the material of the covering glass (1).

4. A signalling lamp as claimed in any one of the preceding claims, characterised in that the webs (6) form a frame (7).

5. A signalling lamp as claimed in any one of the preceding claims, characterised in that the webs (6) and the covering glass (1) can be manufactured in one operation.

6. A signalling lamp as claimed in any one of the preceding claims, characterised in that the webs (6) feature a trapezoid cross-section, with the ground line (12) of the trapezium being connected with the covering glass (1).

7. A signalling lamp as claimed in claim 6, characterised in that the opposite lateral surfaces of the webs (6) which are not parallel to each other are applied by part of the light of the light source which is aligned parallel to the optical axis.

8. A signalling lamp as claimed in claim 6 or in claim 7, characterised in that the ground lines (12) have the same length.

9. A signalling lamp as claimed in any one of the preceding claims, characterised in that the covering glass (1) has a dyed layer (10), facing the webs (6), and a covering layer (11) pointing to the outside.

10. A signalling lamp as claimed in claim 9, characterised in that the covering layer (11) is clear.

11. A signalling lamp as claimed in claim 9 or in claim 10, characterised in that the intermediate layer (11) has an optical system (16) for the light distribution.

12. A signalling lamp as claimed in any one of claims 9 through 11, characterised in that the intermediate and covering layers (10 and 11) can be manufactured in one operation.

13. A signalling lamp as claimed in any one of claims 9 through 12, characterised in that the covering layer (11) extends over a plurality of light cover elements.

14. A signalling lamp as claimed in any one of the preceding claims, characterised in that the outside surface of the covering glass (1) is smooth or structured.

## Revendications

1. Feu de signalisation, en particulier pour véhicules automobiles, comprenant une source de lumière, un boîtier et un verre de protection (1) refermant ce boîtier et comportant, à sa surface intérieure (9) orientée face à la source de lumière, un réseau de bandes ou de grilles opaques de couleur,
caractérisé en ce que le réseau de bandes ou de grilles est constitué de nervures (6) réalisées en une matière plastique opaque, qui est moulée sur la surface intérieure (9) du verre de protection (1).

2. Feu de signalisation selon la revendication 1, dans lequel le verre de protection (1) est réalisé en une matière plastique transparente, caractérisé en ce que les nervures (6) sont réalisées en une matière plastique différente de la matière formant le verre de protection (1).

3. Feu de signalisation selon la revendication 1, dans lequel le verre de protection (1) est réalisé en une matière plastique transparente, caractérisé en ce que les nervures (6) sont réalisées en une matière plastique identique à la matière formant le verre de protection (1).

4. Feu de signalisation selon l'une des revendications précédentes, caractérisé en ce que les nervures (6) forment une grille (7).

5. Feu de signalisation selon l'une des revendications précédentes, caractérisé en ce que les nervures (6) et le verre de protection (1) peuvent être fabriqués en une seule opération.

6. Feu de signalisation selon l'une des revendications précédentes, caractérisé en ce que les nervures (6) présentent une section transversale en forme de trapèze, la ligne de base (12) du trapèze touchant le verre de protection (1).

7. Feu de signalisation selon la revendication 6, caractérisé en ce que les faces des flancs opposés et non parallèles des nervures (6) reçoivent une partie de la lumière émise par la source de lumière et orientée parallèlement à l'axe optique.

8. Feu de signalisation selon la revendication 6 ou la revendication 7, caractérisé en ce que les lignes de base (12) présentent toutes la même longueur.

9. Feu de signalisation selon l'une des revendications précédentes, caractérisé en ce que le verre de protection (1) comporte une couche teintée (10) orientée face aux nervures (6), et une couche de couverture (11) orientée vers l'extérieur.

10. Feu de signalisation selon la revendication 9, caractérisé en ce que la couche de couverture (11) est claire.

11. Feu de signalisation selon la revendication 9 ou la revendication 10, caractérisé en ce que la couche intermédiaire (10) comporte un dispositif optique (16) pour la diffusion de la lumière.

12. Feu de signalisation selon l'une des revendications 9 à 11, caractérisé en ce que les couches intermédiaire et de couverture (10 et 11) peuvent être réalisées en une seule opération.

13. Feu de signalisation selon l'une des revendications 9 à 12, caractérisé en ce que la couche de couverture (11) s'étend sur plusieurs éléments du verre diffuseur.

14. Feu de signalisation selon l'une des revendications précédentes, caractérisé en ce que la surface extérieure du verre de protection (1) est soit lisse, soit texturée.
